# EUROPEAN PATENT SPECIFICATION

(11) **EP 0 292 239 B1**
(45) Date of publication and mention of the grant of the patent: **09.03.1994**
(21) Application number: 88304461.2
(22) Date of filing: 17.05.1988
(51) Int. Cl.: H04N 5/275

(54) **Video compositing using a software linear keyer**
Videoausarbeitung mit einer Software-Lineartastschaltung
Composition vidéo utilisant un circuit de commutation linéaire à logiciel

(30) Priority: 18.05.1987 US 50448
(43) Date of publication of application: 23.11.1988
(73) Proprietor: The Grass Valley Group, Inc., Nevada City California 95945 (US)
(72) Inventor: Maltz, Ivan J., Boonton New Jersey 07005 (US)
(74) Representative: Molyneaux, Martyn William

(56) References cited:
- EP-A- 0 236 943
- GB-A- 2 078 049

## Description

### Background of the Invention

The present invention relates to video compositing systems, and more particularly to video compositing systems using a software controlled linear keyer for a character generator which provides anti-aliased characters, translucent letters and fades and dissolves without requiring an eternal switcher or keyer.

GB-A-2,078,049 discloses an apparatus for mixing a graphic image over an background image such that the symbol is superimposed on the background image. By reduction of the value of the background signal over the graphic image area, the graphic symbol is rendered perceptually transparent.

In a video production environment one video source must often be matted or composited over a second video source. A video keyer is generally used to produce the composite image. Character generators and other graphic devices often supply a key signal in addition to their normal color outputs. The key signal is used to cut a hole in the background video. When viewed on a monitor the key signal looks like a high contrast, black and white version of the graphic image. The key signal is white for the portions of the screen where the graphic image would obscure the background video, and black where the background video is to be seen. The key signal and color outputs are input to a video keyer which uses the key signal to switch between the foreground graphic image, and a background video source to produce a single video signal output, the matted video.

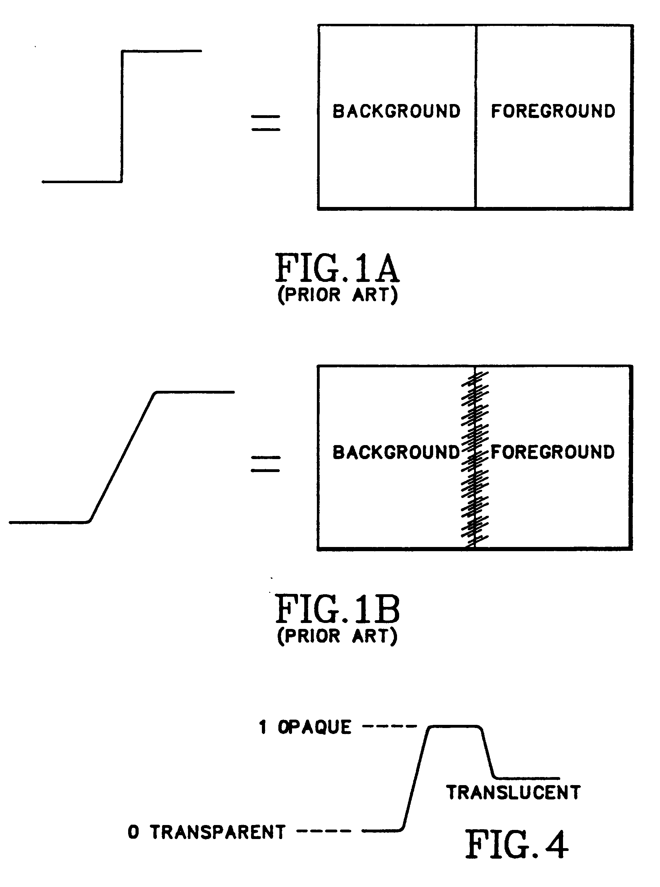

Key signals produced by traditional graphic devices have been hard edged, i.e., the foreground video source is either on or off and never in-between as illustrated in Fig. 1A. Unfortunately the sharp transition between foreground and background video can cause "chroma-creep" and other distracting artifacts in the composite image. Soft keyers were developed to soften the edge between foreground and background video. Two controls, clip and gain, transform the sharp-edged hard key signal into a smooth, ramped key signal. The clip control chooses a threshold value above which the key signal is considered on and below which the key signal is considered off. The gain control specifies the slope of the output key signal. The ramped key signal, illustrated in Fig. 1B, is then fed to a linear keyer to produce a weighted average between the foreground and background video based on the luminance level of the incoming key signal.

The jagged edges produced by traditional character generators are caused by the hard transition between background video and foreground characters. These transitions take place at pixel boundaries, typically 25 to 50 nanoseconds apart. A properly anti-aliased character has its edges blended with the background. The amount of blending varies from pixel to pixel and depends upon the shape of the character. The anti-aliasing computations required for a self-contained graphic display, i.e., no background video, use well know digital signal processing techniques. Soft keyers reduce the "jaggies" by blurring the edges of the characters. Since a soft keyer has no knowledge about the true shape of a character, aliasing artifacts still exist. Correct anti-aliasing requires that the near vertical edges of a character exhibit a fast transition, one or two pixels from off to on, while near horizontal edges exhibit a slow transition, as long as twenty pixels. Serious problems are often encountered when an anti-aliased display is matted over background video. A hard keyer fringes the foreground graphic with its original background color. Although a soft keyer mutes this problem somewhat, it still allows portions of the original background color to bleed through.

What is desired is a video compositing system which eliminates anti-aliasing artifacts while providing the capability of performing new compositing effects independent of external video keyers.

### Summary of the Invention

According to a first aspect of the present invention there is provided an apparatus comprising:
means for defining a graphics image;
means for providing a key signal for each portion of the graphics image;
means for varying the key signal independently for each portion of the graphics image to produce a desired effect; and
means for combining the graphics image with a background image in a proportion determined by the key signal to produce a mixed image output incorporating the desired effect.

According to a second aspect of the present invention there is provided a method for providing translucency of a graphic image comprising the steps of:
defining a key signal for each portion of the graphic image;
varying the key signal independently for each portion of the graphics image according to a desired translucency; and
mixing the graphic image with a background image in a proportion determined by the key signal at each portion of the graphics image to produce a mixed image output wherein the graphic image has the desired translucency.

Thus there is disclosed a video compositing system using software control of an integrated linear keyer. A graphic generator features a large run-length-encoded frame buffer, a palette look-up table and an integrated linear keyer. The output of the palette look-up table is a digital data word for each component color and for key. All four signals are converted to analog, the color components are encoded into a desired standard television video signal, and the video signal and the key signal are routed to a linear keyer. The key signal provides a translucency value for the color from the encoder for novel affects, provides knowledge of the shape of the character or graphic image for improved anti-aliasing, and is used for dissolves and fades by varying the key values in the palette look-up table.

The objects, advantages and other novel features of the present invention will be apparent from the following detailed description when read in conjunction with the appended claims and attached drawing.

### Brief Description of the Drawing

Figs. 1A and 1B illustrate a hard and a soft key according to the prior art.

Fig. 2 is a block diagram of a video compositing system using an integrated linear keyer according to the present invention.

Figs. 3A, 3B, 3C and 3D illustrate a graphic image with different video effects produced by the present invention.

Fig. 4 illustrates a key according to the present invention for providing a translucent effect.

### Description of the Preferred Embodiment

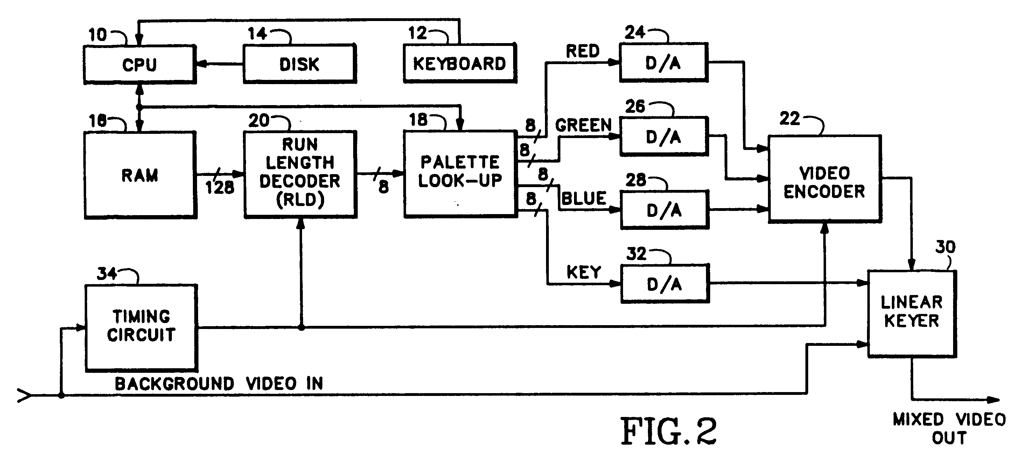

Referring now to Fig. 2 a central processing unit (CPU) 10 receives inputs from an operator via a keyboard 12 or from a bulk memory 14, such as a magnetic disk. Connected to the CPU 10 are a random access memory (RAM) 16 and a palette look-up table 18. A run length decoder (RLD) 20 is inserted between the RAM 16 and the palette look-up table 18 since the graphic image stored in the RAM is in a "run-length-encoded" format. The outputs of the palette look-up table 18 are three primary color components and a key signal. The three primary color components are input to a video encoder 22 via respective digital to analog (D/A) converters 24, 26, 28 to produce a graphic image to be composited with an input background video. A linear keyer 30 receives as inputs the background video, the graphic image from the video encoder 22 and the key signal via D/A converter 32 to output a mixed, or composited, video output. Timing for the video compositing system is provided by a timing circuit 34 which derives from the background video all necessary timing signals to be applied to the RLD 20 and the video encoder 22 to assure synchronization of the graphic image with the background video.

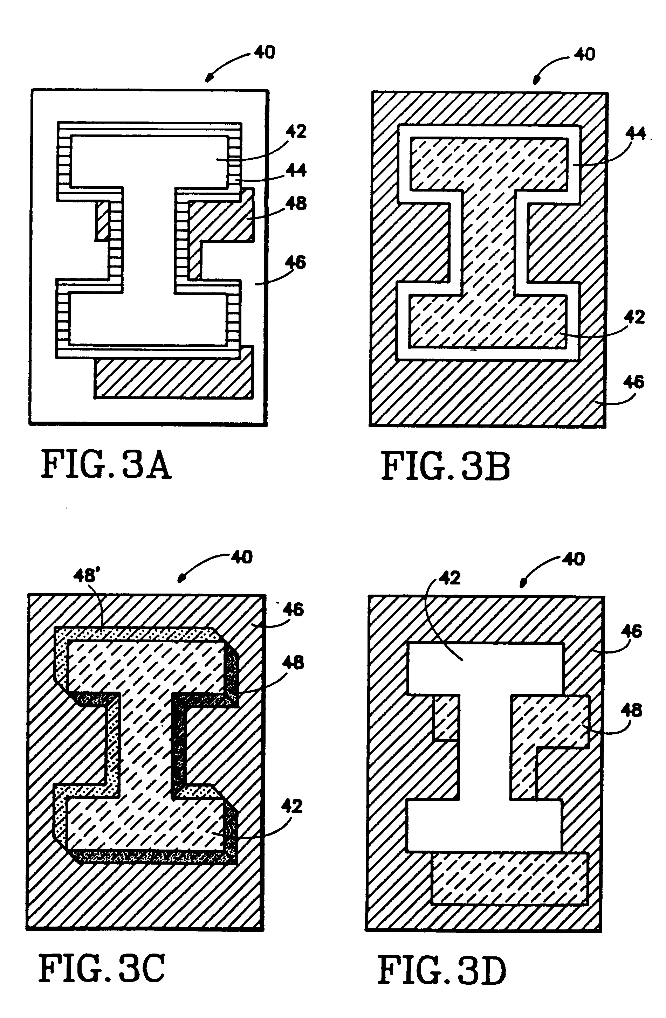

For a character generator a typical character graphic image 40 is shown in Fig. 3A. The character graphic image 40 has a foreground portion 42 surrounded by an edge portion 44. The image 40 is presented against a screen 46 and includes a drop shadow portion 48 projected upon the screen. In prior character generators the character image 40 is blended with the screen 46 and provided to an external switcher, or video keyer, to matte with the external, background video. However by providing an internal key signal as well as the color palette information in the palette look-up table 18, and by using an integrated software linear keyer 30, the character graphics image 40 may be blended with the external background video directly to produce not just an improved anti-aliased graphics image, but several special video effects. One such effect is illustrated in different embodiments in Figs. 3B, 3C and 3D. The key value supplied from the palette look-up table 18 as part of a color can be considered the translucency of the color. As shown in Fig. 4 a key value of zero indicates the color is transparent, i.e., the background video is completely visible, and the maximum key value creates an opaque color completely obscuring the background video. Intermediate key values produce translucent colors by allowing part of the background video to bleed through. In Fig. 3B the character graphic image 40 is illustrated as being translucent in the foreground portion 42 by the dotted continuation lines corresponding to the shading lines for the screen 46. The key signal values in the palette look-up table 18 for this character provide a maximum key value for the edge portion 44, which is opaque, and an intermediate key value for the foreground portion 42 so that the foreground portion, when matted with the external background video in the linear keyer 30, produces a translucent effect, i.e., a portion of the background video shows through the foreground portion. The foreground portion 42 could even be multi-colored to produce tinting or shading effects.

Likewise for Fig. 3C an embossed, translucent effect may be achieved by using the foreground portion 42, the drop shadow portion 48, and a reverse drop shadow portion 48′. The key signal for each portion has a different value. For instance the key value for the foreground portion 42 could produce a quite translucent effect, the key value for the reverse drop shadow portion 48′ could produce a more opaque effect, and the key value for the drop shadow portion 48 an even more opaque effect. Further the two drop shadows 48, 48′ could be assigned respectively a dark color and a light color. Finally Fig. 3D illustrates a true background shadow achieved by using the key signal to generate an opaque foreground portion 42 and a translucent drop shadow 48.

Each pixel of the character graphic image 40 is either one hundred percent of one component, foreground 42, edge 44, drop shadow 48 or screen 46, or a blend of two adjacent components. The six possible pairings are: foreground-edge, foreground-shadow, foreground-screen, edge-shadow, edge-screen and shadow-screen. If a component pair can have fifteen intermediate blends, a character graphic image 40 can use a maximum of 15x6+4=94 possible colors. In practice the number of intermediate blends can be limited to seven, allowing an anti-aliased, edged and shadowed character to be displayed using about fifty palette look-up table entries. If a component pair does not include screen color, its key value is set to a fully opaque value. If one of the components is screen color, the key value indicates the percentage of screen color for that pixel. A lower key value specifies that a higher percentage of background video should be blended by the linear keyer 30. The red, green and blue values stored in the palette look-up table 18 are taken entirely from the non-screen color so that the resulting mixed output does not include any of the internally generated screen color, eliminating the screen bleed or fringing problem.

Fade and dissolve effects can also be generated by the character generator by varying the key values for the entire palette look up table 18. When all the key values are maximum, only the graphic image is seen. As the key values are gradually reduced, the external background video mixes with the foreground graphics image until, when the key value reaches zero, only the background video remains. If the foreground image has any translucent areas, the rate of variation of the key values for such areas can be made different than the rate for opaque areas so that the image fades evenly. Of course the converse can be done, resulting in a foreground graphic image fading in over a background video. Also different portions of the graphic image may be faded independently.

In operation an operator at the keyboard 12 interacts with the CPU 10 to generate a graphics image to be matted over the external background video. The bulk memory 14 is accessed by the CPU 10 for standard images such as character fonts. The RAM 16 provides a program portion containing the executable software code, a temporary storage portion for interim processing results, and a display generation portion. The RLD 20 converts the run-length-encoded display information from the RAM 16 into a series of two byte segments. One byte from the RLD 20 is a color address word for the palette look-up table 18, and the other byte is a pixel duration count indicating the number of pixels for which that color is output. The palette look-up table 18 is loaded via information from the bulk memory 14 and modified as desired by operator interaction via the keyboard 12. The information for each color location of the palette look-up table 18 includes a value for each of the primary colors, red, green and blue, and a key value. The primary colors are combined in the video encoder 22 to produce the proper encoded color output. The encoded color output is blended with the background video in the linear keyer 30 according to the associated key value. The operator, by varying the key value contents of the palette look-up table 18, can produce the desired video effects discussed above. Also by combining the graphic image directly with the background video rather than first blending it with a screen, the anti-aliasing characteristics are improved.

Thus the present invention provides a video compositing system using an integrated software controlled linear keyer which allows for improved anti-aliasing of graphic images as well as special video effects by associating a key value for each color value in a palette look-up table, the key value being variable according to program control in response to operator interaction. The key value serves to blend the graphic image with the background video to produce a matted output video.

## Claims

1. An apparatus comprising:
means (10-16) for defining a graphics image;
means (18) for providing a key signal for each portion of the graphics image;
means (10, 12, 18) for varying the key signal independently for each portion of the graphics image to produce a desired effect; and
means (30) for combining the graphics image with a background image in a proportion determined by the key signal to produce a mixed image output incorporating the desired effect.

2. Apparatus according to claim 1 wherein said means for defining comprises processor means (10, 14, 16) responsive to operator commands (12) for generating graphics image data.

3. Apparatus according to claim 2 wherein said means for providing is responsive to said processor means (10, 14, 16) whereby said key signal is varied.

4. Apparatus according to any preceding claim wherein said means for providing has memory means (18) for storing data, said data comprising plural values of key signal.

5. Apparatus according to claim 4 wherein said data further comprises color data of said graphics image.

6. A method for providing translucency of a graphic image comprising the steps of:
defining (10-18) a key signal for each portion of the graphic image;
varying (10, 12, 18) the key signal independently for each portion of the graphics image according to a desired translucency; and
mixing (30) the graphic image with a background image in a proportion determined by the key signal at each portion of the graphics image to produce a mixed image output wherein the graphic image has the desired translucency.

## Patentansprüche

1. Vorrichtung mit:
einer Einrichtung (10-16) zur Definition eines graphischen Bilds;
einer Einrichtung (18) zur Bereitstellung eines Tastsignals für jeden Teil des graphischen Bilds;
einer Einrichtung (10, 12, 18) zur unabhängigen Veränderung des Tastsignals für jeden Teil des graphischen Bilds, zur Erzeugung eines gewünschten Effekts; und
einer Einrichtung (30) zur Kombination des graphischen Bilds mit einem Hintergrundbild, und zwar in einem durch das Tastsignal bestimmten Verhältnis, um eine Mischbildausgabe zu erzeugen, die den gewünschten Effekt enthält.

2. Vorrichtung nach Anspruch 1, dadurch gekennzeichnet, daß die genannte Definationseinrichtung eine Prozessoreinrichtung (10, 14, 16) aufweist, die zur Erzeugung graphischer Bilddaten auf Operatorbefehle (12) anspricht.

3. Vorrichtung nach Anspruch 2, dadurch gekennzeichnet, daß die genannte Bereitstellungseinrichtung auf die genannte Prozessoreinrichtung (10, 14, 16) anspricht, wodurch das genannte Tastsignal verändert wird.

4. Vorrichtung nach einem der vorstehenden Ansprüche, dadurch gekennzeichnet, daß die genannte Bereitstellungseinrichtung eine Speichereinrichtung (18) zur Speicherung der Daten aufweist, wobei die genannten Daten mehrere Werte des Tastsignals umfassen.

5. Vorrichtung nach Anspruch 4, dadurch gekennzeichnet, daß die genannten Daten ferner Farbdaten des genannten graphischen Bilds umfassen.

6. Verfahren zur Bereitstellung einer Transparenz eines graphischen Bilds, umfassend die Schritte:
Defination (10-18) eines Tastsignals für jeden Teil des graphischen Bilds;
Veränderung (10, 12, 18) des Tastsignals, unabhängig für jeden Teil des graphischen Bilds gemäß einer gewünschten Transparenz; und
Mischen (30) des graphischen Bilds mit einem Hintergrundbild, und zwar in einem Verhältnis, das durch das Tastsignal an jedem Teil des graphischen Bilds bestimmt wird, zur Erzeugung einer Mischbildausgabe, bei der das graphische Bild die gewünschte Transparenz aufweist.

## Revendications

1. Appareil comprenant :
des moyens (10-16) pour définir une image graphique ;
des moyens (18) pour fournir un signal de clé pour chaque partie de l'image graphique ;
des moyens (10, 12, 18) pour modifier le signal de clé indépendamment pour chaque partie de l'image graphique afin de produire un effet désiré ; et
des moyens (30) pour combiner l'image graphique avec une image de fond dans une proportion déterminée par le signal de clé afin de produire une sortie d'image mixée incorporant l'effet désiré.

2. Appareil selon la revendication 1, dans lequel lesdits moyens de définition comprennent des moyens de processeur (10, 14, 16) agissant en réponse à des commandes (12) de l'opérateur pour engendrer des données d'image graphique.

3. Appareil selon la revendication 2, dans lequel lesdits moyens fournisseurs agissent en réponse auxdits moyens de processeur (10, 14, 16), moyennant quoi ledit signal de clé est modifié.

4. Appareil selon l'une quelconque des revendications précédentes, dans lequel lesdits moyens fournisseurs comprennent des moyens de mémoire (18) pour stocker des données, lesdites données comprenant plusieurs valeurs du signal de clé.

5. Appareil selon la revendication 4, dans lequel lesdites données comprennent en outre des données de couleur de ladite image graphique.

6. Procédé pour donner de la translucidité à une image graphique comprenant les étapes de :
définition (10-18) d'un signal de clé pour chaque partie d'image graphique ;
modification (10, 12, 18) du signal de clé indépendamment pour chaque partie de l'image graphique selon une translucidité désirée ; et
mixage (30) de l'image graphique avec une image de fond dans une proportion déterminée pour signal de clé pour chaque partie de l'image graphique afin de produire une sortie d'image mixée dans laquelle l'image graphique a la translucidité désirée.
